# EUROPÄISCHE PATENTANMELDUNG

(11) **EP 1 349 404 A1**
(43) Veröffentlichungstag der Anmeldung: **01.10.2003**
(21) Anmeldenummer: 02007192.4
(22) Anmeldetag: 28.03.2002
(51) Int. Cl.: H04Q 7/32, G06F 1/00

(54) **Verfahren zum Laden eines Softwareprogramms auf ein mobiles Kommunikationsendgerät**

(71) Anmelder: SIEMENS AKTIENGESELLSCHAFT, 80333 München (DE)
(72) Erfinder: Hitz, Hans-Joachim, 82064 Strasslach-Dingharting (DE); Riedinger, Markus, 85764 Oberschleissheim (DE); Sillge, Leif, 47167 Duisburg (DE)

(57) **Zusammenfassung**

Die Erfindung betrifft ein Verfahren zum Laden eines Softwareprogramms auf mindestens ein mobiles Kommunikationsendgerät, mit den Schritten:
a) Generieren eines individuellen Codes, der dem mindestens einen mobilen Kommunikationsendgerät zugeordnet ist,
b) Berechnen eines Kennwerts für den individuellen Code mittels einer mathematischen Einweg-Funktion,
c) Speichern des Kennwerts auf dem mindestens einen mobilen Kommunikationsendgerät,
d) Übermitteln des Codes an das mindestens eine mobile Kommunikationsendgerät zu Beginn eines Ladevorgangs für das Softwareprogramm,
e) Berechnen eines Kennwerts für den in Schritt d) übermittelten Code durch das mindestens eine mobile Kommunikationsendgerät mittels der mathematischen Einweg-Funktion,
f) Vergleichen des in Schritt e) berechneten Kennwerts mit dem in Schritt c) in dem mindestens einen mobilen Kommunikationsendgerät gespeicherten Kennwert,
g) Laden des Softwareprogramms auf das mindestens eine mobile Kommunikationsendgerät, wenn der Vergleich aus Schritt f) eine Übereinstimmung der Kennwerte ergeben hat.

## Beschreibung

Verfahren zum Laden eines Softwareprogramms auf ein mobiles Kommunikationsendgerät

Die Erfindung bezieht sich auf ein Verfahren zum Laden eines Softwareprogramms auf mindestens ein mobiles Kommunikationsendgerät.

Zum Betrieb eines mobilen Kommunikationsendgeräts ist es sowohl erforderlich, anfänglich ein Softwareprogramm auf das mobile Kommunikationsendgerät zu laden, so dass es seine Funktion ausführen kann, als auch zu einem späterem Zeitpunkt aktualisierte Versionen des Softwareprogramms auf das mobile Kommunikationsendgerät zu übertragen.

Zu diesem Zweck ist bei einem mobilen Kommunikationsendgerät eine Schnittstelle für das Laden einer minimalen Software vorgesehen, die "boot strap loader" genannt wird und für jede Person benutzbar ist, die über das erforderliche Know-how verfügt.

Bisher wurde davon ausgegangen, dass das Know-how zum Laden einer Software auf das mobile Kommunikationsendgerät außerhalb vertrauenswürdiger Stellen nicht bekannt ist. In manchen Fällen ist aus Sicherheitsgründen auch eine spezielle Hardware in Form einer sog. Boot-Box Oder eines Boot-Kabels erforderlich, um eine Software oder eine aktualisierte Version einer Software auf ein mobiles Kommunikationsendgerät zu laden. Diese Maßnahmen haben sich jedoch als lückenhaft erwiesen. Aus diesem Grund kann derzeit nicht mit der erforderlichen Sicherheit ausgeschlossen werden, dass nicht von dem Hersteller der Software bzw. des mobilen Kommunikationsendgeräts stammende Software durch unbefugte Personen auf das mobile Kommunikationsendgerät geladen wird.

Ausgehend hiervon liegt der Erfindung die Aufgabe zugrunde, das Laden einer Software auf ein mobiles Kommunikationsendgerät gegenüber Eingriffen Dritter sicherer zu gestalten, insbesondere das Laden fremder Software auf das mobile Kommunikationsendgerät zu erschweren.

Diese Aufgabe wird gelöst durch ein Verfahren zum Laden eines Softwareprogramms auf mindestens ein mobiles Kommunikationsendgerät, mit den Schritten:
a) Generieren eines individuellen Codes, der dem mindestens einen mobilen Kommunikationsendgerät zugeordnet ist,
b) Berechnen eines Kennwerts für den individuellen Code mittels einer mathematischen Einweg-Funktion,
c) Speichern des Kennwerts auf dem mindestens einen mobilen Kommunikationsendgerät,
d) Übermitteln des Codes an das mindestens eine mobile Kommunikationsendgerät,
e) Berechnen eines Kennwerts für den in Schritt d) übermittelten Code durch das mindestens eine mobile Kommunikationsendgerät mittels der mathematischen Einweg-Funktion,
f) Vergleichen des in Schritt e) berechneten Kennwerts mit dem in Schritt c) in dem mindestens einen mobilen Kommunikationsendgerät gespeicherten Kennwert,
g) Laden des Softwareprogramms auf das mindestens eine mobile Kommunikationsendgerät, wenn der Vergleich aus Schritt f) eine Übereinstimmung der Kennwerte ergeben hat.

Dem Verfahren ist es eigentümlich, dass, anders als bei gängigen Authentifizierungsverfahren, bei denen ein PIN-Code eingesetzt wird, nicht die Zugang begehrende Stelle, sondern die Zugang gewährende Stelle einen individuellen Code erhält, der einen Zugang ermöglicht. Das Verfahren besitzt den Vorteil, dass die Sicherheit interner Daten des mobilen Kommunikationsendgeräts, wie der SIM-Lock-Code, private Kundendaten, usw., erhöht wird.

Bevorzugt wird das Softwareprogramm auf mehrere mobile Kommunikationsendgeräte geladen, wobei in Schritt a) für jedes mobile Kommunikationsendgerät ein individueller Code generiert wird und die Schritte b) bis g) für jedes mobile Kommunikationsendgerät durchgeführt werden.

Dabei können die Schritte a) bis c) bei der Herstellung der Kommunikationsendgeräte durchgeführt werden, wobei sich an dem Gesamtablauf der Herstellung nur geringfügige Änderungen ergeben, d. h. bisherige Fertigungskonzepte können ungeändert bleiben.

In Schritt a) können bevorzugt die individuellen Codes für die mobilen Kommunikationsendgeräte programmiert und in einer Datenbank gespeichert werden. Für die Programmierung der individuellen Codes kommt es darauf an, dass kein unmittelbarer Zusammenhang zwischen irgendwelchen Kennwerten des Kommunikationsendgerätes und dem individuellen Code besteht. Dabei ist es jedoch nicht ausgeschlossen, dass ein bestimmter Kennwert des Kommunikationsendgerätes als Ausgangsgröße für die Programmierung des individuellen Codes benutzt wird, wobei zu diesem Zweck beispielsweise ein Hash-Wert einer Seriennummer des mobilen Kommunikationsendgerätes in Frage kommt.

Die Informationen aus dieser Datenbank liegen bei derjenigen Stelle vor, die mit einer Aktualisierung einer bestehenden Software oder dem Laden einer neuen Software auf die mobilen Kommunikationsendgeräte betraut ist.

Die Schritte d) bis g) werden beim eigentlichen Laden des Softwareprogramms auf das mindestens eine mobile Kommunikationsendgerät durchgeführt. Dabei wird in Schritt g) eine Ladeschnittstelle des mindestens einen mobilen Kommunikationsendgerät bei positivem Vergleich freigeschaltet.

In Schritt d) kann der Code zu Beginn eines Ladevorgangs für das Softwareprogramm an das mobile Kommunikationsendgerät übermittelt werden. Alternativ ist es auch möglich, dass der Code im Kommunikationsendgerät zum dauerhaften Öffnen in einem programmierbaren, aber auch nichtflüchtigen Speicherbereich hinterlegt ist. Dies kann beispielsweise vorteilhaft für automatisierte Tests, die das Anbooten erfordern, sein. Es ist generell ein Vorteil des hier beschriebenen Verfahrens, dass es ohne Sicherheitsgefährdung unerheblich ist, ob der Code von Anfang an in dem mobilen Kommunikationsendgerät vorliegt oder erst zu einem späteren Zeitpunkt übermittelt wird.

Aufgrund der Individualität der einzelnen Codes für die mobilen Kommunikationsendgeräte ergibt es sich, dass ein mobiles Kommunikationsendgerät, das beispielsweise durch Ausprobieren oder Diebstahl seines Codes entsperrt worden ist, keine Gefahr für eine vollständige Serie, zu der es gehört, bedeutet, denn der Code ermöglicht ausschließlich das Entsperren des betreffenden mobilen Kommunikationsendgerätes. Des weiteren besteht die Möglichkeit, dass einzelne Codes für bestimmte mobile Kommunikationsendgeräte bei Bedarf an vertrauenswürdige Dritte weitergegeben werden, ohne dass der Schutz für verbleibende Kommunikationsendgeräte einer Serie beeinträchtigt wird.

Als mathematische Einweg-Funktion kann eine im Stand der Technik bekannte Hash-Funktion verwendet werden, die gewährleistet, dass aus dem im mobilen Kommunikationsendgerät abgelegten Kennwert (Hash-Wert) des Zugangscodes nicht auf den Code selbst rückgeschlossen werden kann. Aus diesem Grund ist es nicht erforderlich, den Kennwert bzw. Hash-Wert im mobilen Kommunikationsendgerät geschützt abzulegen.

Ein Ausführungsbeispiel der Erfindung wird anhand des beigefügten Ablaufdiagramms noch näher erläutert.

Zunächst wird bei der Herstellung jedes einzelnen mobilen Kommunikationsendgerätes ein dem Kommunikationsendgerät allein zugeordneter, individueller PIN-Code zugeordnet und in einer Datenbank abgelegt. Die Datenbank liegt im Zugriffsbereich einer Stelle, die für das Laden neuer Softwareprogramme oder aktualisierter Versionen bereits vorhandener Softwareprogramme auf das mobile Kommunikationsendgerät zuständig ist. In diesem Zuge wird mittels einer kryptographischen Hash-Funktion als mathematischer Einweg-Funktion der Hash-Wert des individuellen PIN-Codes berechnet und auf dem mobilen Kommunikationsendgerät gespeichert.

Sobald eine neue Version eines Softwareprogramms auf das Kommunikationsendgerät geladen werden soll, findet der folgende Ablauf statt:

In einem Schritt 1 wird das Kommunikationsendgerät zurückgesetzt, wonach in einem Schritt 2 von einem externen Personalcomputer, der auf die Datenbank Zugriff hat, in der die während der Herstellung programmierten PIN-Codes gespeichert sind, eine Minimal-/Aktualisierungssoftware an das mobile Kommunikationsendgerät übermittelt wird.

In einem Schritt 3 wird abgefragt, ob ein Boot-Schutz für das mobile Kommunikationsendgerät aktiviert ist. Ist dies nicht der Fall, wird die empfangene Software unmittelbar ausgeführt. Bei aktiviertem Boot-Schutz prüfte eine Software im mobilen Kommunikationsendgerät, ob in den von den Personalcomputern übermittelten Daten ein PIN-Code vorhanden ist (Schritt 4). Im positiven Fall wird seitens des Kommunikationsendgerätes mittels derselben Hash-Funktion, die bei der Herstellung des mobilen Kommunikationsendgerätes zum Berechnen des Hash-Wertes des programmierten PIN-Codes benutzt wurde, der Hash-Wert des empfangenen PIN-Codes berechnet (Schritt 5). Im negativen Fall, d. h., wenn die übermittelten Daten keinen PIN-Code enthalten, liegt ein nicht manipulierbarer Zustand des Kommunikationsendgeräts vor, d. h. das Softwareprogramm kann nicht auf das Kommunikationsendgerät geladen werden.

Bei vorhandenem PIN-Code wird nach der Berechnung seines Hash-Wertes der Vergleich angestellt zwischen dem berechneten Hash-Wert und dem während der Herstellung des mobilen Kommunikationsendgerätes in dem Kommunikationsendgerät abgelegten Hash-Wert (Schritt 6). Fällt dieser Vergleich positiv aus, wird die Minimal-Software ausgeführt (Schritt 7). Es liegt dann ein manipulierbarer Zustand des Kommunikationsendgerätes vor, so dass neue Softwareprogramme oder eine aktualisierte Version eines bereits vorhandenen Softwareprogramms auf das Kommunikationsendgerät geladen werden können. Ist der Vergleich negativ, wird wiederum der nicht manipulierbare Zustand des Kommunikationsendgerätes erreicht.

Bei einer Mehrzahl Kommunikationsendgeräte ist jedem einzelnen ein individueller PIN-Code zugeordnet und das oben beschriebenen Verfahren läuft für sämtliche Kommunikationsendgeräte in derselben Weis ab, wobei die dem eigentlichen Laden der Software vorhergehenden Schritte vor eine Serie der Kommunikationsendgeräte in einem Arbeitsgang durchgeführt werden kann.

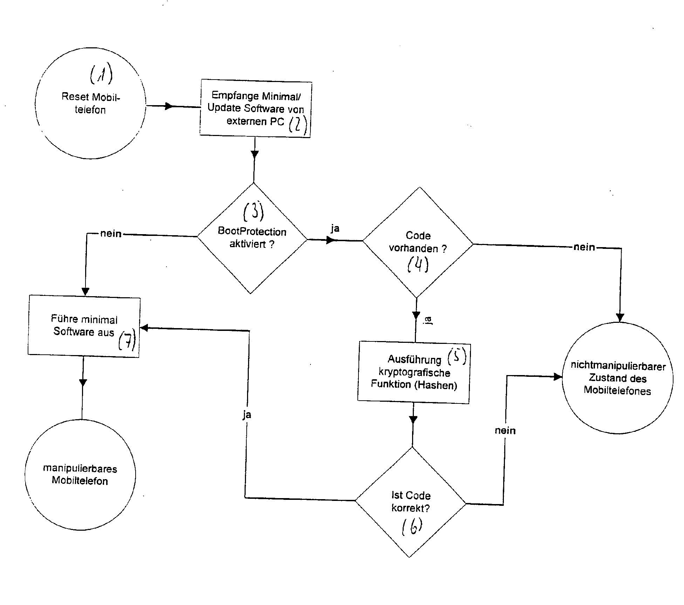

## Patentansprüche

1. Verfahren zum Laden eines Softwareprogramms auf mindestens ein mobiles Kommunikationsendgerät, mit den Schritten:
a) Generieren eines individuellen Codes, der dem mindestens einen mobilen Kommunikationsendgerät zugeordnet ist,
b) Berechnen eines Kennwerts für den individuellen Code mittels einer mathematischen Einweg-Funktion,
c) Speichern des Kennwerts auf dem mindestens einen mobilen Kommunikationsendgerät,
d) Übermitteln des Codes an das mindestens eine mobile Kommunikationsendgerät,
e) Berechnen eines Kennwerts für den in Schritt d) übermittelten Code durch das mindestens eine mobile Kommunikationsendgerät mittels der mathematischen Einweg-Funktion,
f) Vergleichen des in Schritt e) berechneten Kennwerts mit dem in Schritt c) in dem mindestens einen mobilen Kommunikationsendgerät gespeicherten Kennwert,
g) Laden des Softwareprogramms auf das mindestens eine mobile Kommunikationsendgerät, wenn der Vergleich aus Schritt f) eine Übereinstimmung der Kennwerte ergeben hat.

2. Verfahren nach Anspruch 1,
bei dem das Softwareprogramm auf mehrere mobile Kommunikationsendgeräte geladen wird, in Schritt a) für jedes mobile Kommunikationsendgerät ein individueller Code generiert wird und die Schritte b) bis g) für jedes mobile Kommunikationsendgerät durchgeführt werden.

3. Verfahren nach Anspruch 2,
bei dem Schritt a) bis c) bei der Herstellung der Kommunikationsendgeräte durchgeführt wird.

4. Verfahren nach einem der Ansprüche 2 oder 3,
bei dem in Schritt a) die individuellen Codes programmiert und in einer Datenbank gespeichert werden.

5. Verfahren nach einem der Ansprüche 1 bis 4,
bei dem die Schritte d) bis g) beim Laden der Software auf das mindestens eine mobile Kommunikationsendgerät durchgeführt werden.

6. Verfahren nach einem der Ansprüche 1 bis 5,
bei dem in Schritt g) eine Ladeschnittstelle des mindestens einen mobilen Kommunikationsendgerätes bei positivem Vergleich freigeschaltet wird.
